(19) Europäisches Patentamt
European Patent Office
Office européen des brevets

(11) Veröffentlichungsnummer: **0 137 447**
**B1**

(12) # EUROPÄISCHE PATENTSCHRIFT

(45) Veröffentlichungstag der Patentschrift: 03.05.89

(21) Anmeldenummer: 84111801.1

(22) Anmeldetag: 03.10.84

(51) Int. Cl.⁴: C 08 F 10/00, C 08 F 4/14, C 08 F 4/12, C 08 F 10/10, C 08 F 210/10

**ERRATUM**

| DIE TEXTSTELLE:<br>TEXT PUBLISHED:<br>LE PASSAGE SUIVANT: | (SEITE, SPALTE, ZEILE)<br>(PAGE, COLUMN, LINE)<br>(PAGE, COLONNE, LIGNE) | | | LAUTET BERICHTIGT:<br>SHOULD READ:<br>DEVRAIT ETRE LU: |
|---|---|---|---|---|
| den reinen Hydroxider, | 3 | 3 | 3 | den reinen Hydrooxiden, |
| 50 sec mit Hilfe von 0,2 mol% | 3 | 4 | 18 | 60 sec mit Hilfe von 0,2 mol% |

Tag der Entscheidung über die Berichtigung / Date of decision on rectification / Date de décision portant ...: 16.08.89

Ausgabe- und Veröffentlichungstag / Issue and publication date / Date d'edition et de publication: 18.10.89

Patbl.Nr / EPB no / Bull. no: 89/42

(19) Europäisches Patentamt
European Patent Office
Office européen des brevets

(11) Veröffentlichungsnummer: **0 137 447**
**B1**

# (12) EUROPÄISCHE PATENTSCHRIFT

(45) Veröffentlichungstag der Patentschrift: **03.05.89**

(51) Int. Cl.⁴: **C 08 F 10/00,** C 08 F 4/14, C 08 F 4/12, C 08 F 10/10, C 08 F 210/10

(21) Anmeldenummer: **84111801.1**

(22) Anmeldetag: **03.10.84**

## (54) Verfahren zur Qualitätsverbesserung von Polymerisaten des Isobutens.

(30) Priorität: **06.10.83 DE 3336355**

(43) Veröffentlichungstag der Anmeldung: **17.04.85 Patentblatt 85/16**

(45) Bekanntmachung des Hinweises auf die Patenterteilung: **03.05.89 Patentblatt 89/18**

(84) Benannte Vertragsstaaten: **BE DE FR GB IT NL**

(56) Entgegenhaltungen:
**EP-A- 0 036 974**
**DD-A- 154 983**
**DE-A- 3 137 500**

**Die gesetzlichen Einheiten in der Technik, DIN Deutsches Institut für Normierung e.V., Benth-Verlag GmbH, Berlin/Köln, 5. Auflage, 1980, pp.244-245**

(73) Patentinhaber: **BASF Aktiengesellschaft, Carl-Bosch-Strasse 38, D-6700 Ludwigshafen (DE)**

(72) Erfinder: **Bronstert, Klaus, Dr., Gartenstrasse 26, D-6719 Carlsberg (DE)**
Erfinder: **Hochstein, Waldhelm, Dr., Am Wurmberg 4, D-6713 Freinsheim (DE)**
Erfinder: **Vogel, Hans-Henning, Dr., Hans-Purrmann-Strasse 7 c, D-6710 Frankenthal (DE)**
Erfinder: **Rath, Hans Peter, Dr., Friedhofstrasse 7, D-6718 Gruenstadt (DE)**

**EP 0 137 447 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Verbesserung der Weiterverarbeitungseigenschaften von Polymerisaten des Isobutens.

Homopolymerisate und Oligomerisate des Isobutens sowie Copolymerisate aus überwiegenden Anteilen Isobuten und weiteren, mit Isobuten copolymerisierbaren olefinisch ungesättigten Verbindungen (im folgenden auch als Polyisobutene bezeichnet) sind allgemein bekannt. Das gleiche gilt für die Herstellung der Polyisobutene durch kationische Polymerisation von Isobuten und gegebenenfalls weiteren Comonomeren. Im Hinblick auf die Eigenschaften der Polyisobutene für weitere Umsetzungen nimmt man die Polymerisation zweckmäßigerweise mit Bortrifluorid bei (−50) bis (+30) °C innerhalb von Polymerisationszeiten bis zu etwa 10 Minuten vor, wie es beispielsweise in der DE-OS 27 02 604 empfohlen wird.

Wie ebenfalls allgemein bekannt ist, dienen die Polyisobutene hauptsächlich zur Herstellung hochwertiger Schmieröladditive. Hierzu werden sie zunächst über die in ihrem Molekül infolge des Kettenabbruchs noch vorhandene Doppelbindung mit Maleinsäureanhydrid zu den entsprechenden langkettigen Derivaten des Bernsteinsäureanhydrids umgesetzt, wonach letztere mit Aminen, insbesondere Polyaminen, in die gewünschten, als Schmieröladditive fungierenden Salze, Amide oder Imide der Bernsteinsäure überführt werden.

Es hat sich indes gezeigt, daß die Polyisobutene, darunter auch diejenigen, die nach dem Verfahren der DE-OS 27 02 604 erhältlich sind, in der Regel nicht näher bekannte Begleitstoffe enthalten, die bei Umsetzung mit Maleinsäureanhydrid Rückstände bilden, welche sich an den Wandungen der Reaktionsgefäße absetzen und somit zu technischen Störungen und auch zu einer Qualitätsminderung der Schmieröladditive Anlaß geben.

Der Erfindung lag daher die Aufgabe zugrunde, die in den Polyisobutenen enthaltenden Begleitstoffe zu entfernen oder insoweit zu verändern, daß sie zu keinen Störungen und Qualitätsminderungen der Schmieröladditive mehr Anlaß geben.

Demgemäß wurde ein Verfahren zur Verbesserung der Weiterverarbeitungseigenschaften von Polymerisaten des Isobutens gefunden, welches dadurch gekennzeichnet ist, daß man sie

– bei 50–280 °C mit Aluminiumoxid und/oder einem vollständig oder partiell hydratisierten Aluminiumoxid und/oder

– bei 0–280 °C mit Boroxid und/oder einem vollständig oder partiell hydratisierten Boroxid und/oder mit Titandioxid und/oder einem partiell hydratisierten Titandioxid und/oder mit einem vollständig oder partiell hydratisierten Siliciumdioxid so lange in Kontakt bringt, bis das Polymerisat des Isobutens so weit gereinigt ist, daß es ein rückstandsfreies Umsetzungsprodukt mit Maleinsäureanhydrid liefert.

Als Polymere des Isobutens kommen insbesondere die Homopolymerisate und die Copolymerisate mit überwiegendem Isobutenanteil – im allgemeinen nicht weniger als 80 mol% – in Betracht, die nach dem Verfahren der DE-OS 27 02 604 durch kationische Homo- bzw. Copolymerisation mittels Bortrifluorid als Katalysator bei (−50) bis (+30) °C und einer Polymerisationsdauer von bis zu 10 Minuten erhältlich sind. Die Menge des $BF_3$ beträgt im allgemeinen 0,1 bis 10 mmol pro Mol der Monomeren, und außerdem empfiehlt es sich in aller Regel, bei der Polymerisation noch Cokatalysatoren wie Wasser oder Alkohole in geringen Konzentrationen – etwa 2 bis 200 mol%, bezogen auf die Menge des $BF_3$ – mitzuverwenden.

Als Comonomere kommen in erster Linie die übrigen olefinisch ungesättigten $C_4$-Kohlenwasserstoffe in Betracht, so daß man unmittelbar von den sog. $C_4$-Schnitten ausgehen kann. Die weitgehend selektive Polymerisierbarkeit des Isobutens bedingt jedoch im allgemeinen, daß Comonomere, auch wenn sie im Überschuß eingesetzt werden, nur zu etwa 2 bis 20 mol% in das Polymere eingebaut werden.

Unter dem Begriff der Polyisobutene sind im vorliegenden Zusammenhang auch die Oligomeren, darunter bereits auch das Dimere, zu verstehen.

Den Abbruch der Polymerisation bewirkt man im Falle der Verwendung von $BF_3$ als Katalysator z. B. durch kurzes Erwärmen auf 40–80 °C, wobei das $BF_3$ entweicht, oder allgemein durch Zugabe von Wasser oder Alkoholen wie Methanol. Feste Katalysatorreste werden abfiltriert oder an Absorbentien wie Aluminiumoxid adsorbeirt. Allgemein kann man die Katalysatoren auch mit Wasser, Basen oder Methanol extrahieren. Lösungsmittel und Monomere entfernt man zweckmäßigerweise durch Flashdestillation.

Die auf diese Weise erhältlichen Polyisobutene haben Molekulargewichte ab 112, wobei Produkte mit mittleren Molekulargewichten zwischen etwa 500 und 5000 bevorzugt werden. Allgemein haben diese Produkte einen besonders hohen Anteil der für die weitere Umsetzung wichtigen endständigen Doppelbindungen.

Im übrigen ist das erfindungsgemäße Verfahren jedoch nicht auf Polyisobutene bestimmter Provenienz beschränkt.

Die Nachbehandlung des in der Regel wie üblich von Katalysator und von leicht flüchtigen Bestandteilen befreiten Polybutens wird erfindungsgemäß mit Aluminiumoxid ($Al_2O_3$) und/oder Boroxid ($B_2O_3$) und/oder den vollständigen oder partiellen Hydratisierungsprodukten dieser Oxide und/oder Titandioxid ($TiO_2$) oder partiell hydratisiertem Titandioxid und/oder partiell oder vollständig hydratisiertem Siliciumdioxid ($SiO_2$)

$Al_2O_3 \cdot (H_2O)_n$ bzw. $B_2O_3 \cdot (H_2O)_n$ bzw.
$TiO_2 \cdot (H_2O)_{n-1}$, bzw. $SiO_2\ (H_2O)_{n-1}$

vorgenommen, wobei n einen ganzzahligen oder gebrochenen Wert bis zu 3 haben kann, im Falle des $SiO_2$ oder nicht kleiner als 1,5 sein soll.

Ist n gleich 3, so handelt es sich um Aluminiumorthohydroxid bzw. Orthoborsäure bzw. Orthotitansäure bzw. Orthokieselsäure. Kleinere Werte für n entsprechen den Mischformen zwischen den reinen Oxiden und den reinen Hydroxiden, z.B. $HAlO_2$ (Al-Metahydroxid) und $HBO_2$ (Metaborsäure). Zahlreiche dieser Verbindungen können in verschiedenen Modifikationen auftreten, jedoch hat die Modifikation nach den bisherigen Beobachtungen nur einen untergeordneten Einfluß auf das Gelingen des Verfahrens. Auch geringe Mengen von Nebenbestandteilen, welche die Oxide bzw. die hydratisierten Oxide häufig begleiten, z.B. Fluorid, Chlorid, Alkali- und Erdalkalimetalle sowie Eisen üben keinen erkennbaren Einfluß auf den Verfahrenserfolg aus.

Die zweckmässige Teilchengröße der definitionsgemäßen Kontakte liegt zwischen 0,01 und 3 mm mittlerem Durchmesser, besonders zwischen 0,1 und 1 mm.

Die wirksame Menge der Aluminiumverbindungen richtet sich naturgemäß nach deren Oberfläche und damit nach der Teilchengröße sowie nach der Behandlungsdauer. Bei einer Teilchengröße von 0,5 mm mittleren Durchmessers und einer Kontaktzeit von 5 min im diskontinuierlichen Betrieb beträgt diese Menge etwa 10 bis 12 g pro kg des Polyisobutens. Sind jeweils zwei dieser Größen vorgegeben, so ergibt sich die dritte näherungsweise entsprechend, wie im Einzelfall durch einige Vorversuche unschwer genauer ermittelt werden kann.

Da die Borverbindungen im allgemeinen wirksamer sind, benötigt man von ihnen für die Behandlung unter den vorgenannten Bedingungen nur etwa 0,05–2 g pro kg des Polyisobutens. Verfahrenstechnisch besonders vorteilhaft ist es, Kontakte von Al-Verbindungen zu verwenden, die an der Oberfläche mit etwa 1–10 Gew.%, bezogen auf den Gesamtkontakt, einer der Borverbindungen dotiert sind.

Die höhere Wirksamkeit der Borverbindungen gestattet die erfolgreiche Behandlung des Polyisobutens bereits bei Temperaturen ab etwa 0 °C. In diesem Falle sowie im Falle der mit Bor dotierten Al-Verbindungen wird man daher vorzugsweise bei Raumtemperatur arbeiten.

Für die definitionsgemäßen Titanverbindungen gilt etwa das gleiche wie die Borverbindungen; besonders geeignet ist eine Orthotitansäure, die durch Hydrolyse von Tetrabutylorthotitanat erhältlich ist.

Unter den Siliciumverbindungen erwies sich das reine $SiO_2$ im Gegensatz zu den Hydratformen nur als wenig wirksam.

Wegen der Viskosität der Polyisobutene kann es sich empfehlen, die Behandlung in Gegenwart von etwa 5 bis 70 Gew.% eines Lösungsmittels vorzunehmen. Als Lösungsmittel eignen sich insbesondere aliphatische Kohlenwasserstoffe wie n-Buten, n-Butan und n-Hexan. Im Falle von tief siedenden Lösungsmitteln ist die Behandlung unter entsprechendem Druck (etwa bis zu 70 bar) vorzunehmen; andernfalls arbeitet man vorzugsweise unter Normaldruck.

Verfahrenstechnisch ist es besonders vorteilhaft, das Polyisobuten bzw. dessen Lösungen über einen fest angeordneten Kontakt aus dem difinitionsgemäßen Material zu leiten, z.B. unter mechanischem Druck durch eine Filterschicht.

Die Wirksamkeit der Behandlung ist am einfachsten und praxisnächsten durch Umsetzung des behandelten Polyisobutens mit Maleinsäureanhydrid festzustellen. Sind hierbei keine Rückstände an den Wandungen des Reaktionsgefäßes zu beobachten, so war die Behandlung erfolgreich. Andernfalls sind die Bedingungen der Behandlung zu intensivieren, und gegebenenfalls ist auch der Kontakt zu erneuern.

Beispiel 1

Polyisobuten des mittleren Molekulargewichts 1000, welches durch Polymerisation von Isobuten bei 20 °C und einer Polymerisationsdauer von 50 sec mit Hilfe von 0,2 mol% $BF_3$ hergestellt und wie üblich vom Katalysator und von restlichen Monomeren sowie von den Oligomeren bis zum Polymerisationsgrad von rd. 6 befreit worden war, wurde bei 200 °C unter Druck durch eine Schüttung von saurem $Al_2O_3$ der mittleren Teilchengröße von 0,15 mm gepreßt. Die Höhe der Schüttung betrug 10 cm und ihr Querschnitt rd. 7 $cm^2$. Aus dem Durchfluß des Polyisobutens von 1000 ml/h errechnete sich eine mittlere Kontaktzeit von rd. 20 min.

500 g des so behandelten Polyisobutens wurden in einem Edelstahl-Autoklaven bei 225 °C und einer Reaktionsdauer von 4 h mit 50 g Maleinsäureanhydrid umgesetzt. Nach der Entleerung des Autoklaven waren keine Rückstände zu beobachten. Der Umsatz bei dieser Additionsreaktion betrug 55%, bezogen auf das eingesetzte Maleinsäureanhydrid.

Bei einem Kontrollversuch unter gleichen Bedingungen, jedoch unter Verwendung von nicht vorbehandeltem Polyisobuten war an den Wandungen des Autoklaven sowie am Rührer ein dunkler Rückstand zu beobachten. Dieser Rückstand wurde in Dimethylformamid aufgenommen, nachdem Autoklav und Rührer zur Entfernung des Polyisobutens und dessen Umsetzungsprodukten mit Toluol gewaschen worden waren. Die nach Abdampfung des Dimethylformamids zurückgebliebene Menge des Rückstands betrug 1,8 g.

In einem weiteren Kontrollversuch wurde das Polyisobuten in einer Lösung mit 50 Vol.% Hexan bei Raumtemperatur unter sonst gleichen Bedingungen durch die $Al_2O_3$-Schüttung geleitet. Die anschließende Umsetzung mit Maleinsäureanhydrid lieferte ein Produkt, welches ebensoviel Rückstand enthielt, wie bei Einsatz unbehandelten Polyisobutens.

Beispiel 2

Jeweils 1000 g des Polyisobutens gemäß Beispiel 1 wurden mit

a) 10 g saurem $Al_2O_3$
b) 7,5 g frisch gefälltem $Al(OH)_3$
c) 0,05 g $H_3BO_4$
d) 0,2 g $B_2O_3$
e) 10 g $H_2SiO_3$
f) 10 g $TiO_2$

g) 5 g $Ti(OH)_4$, hergestellt durch Hydrolyse von $Ti(O\text{-}butyl)_4$

15 min lang auf 200 °C erhitzt und danach von diesen Materialien abfiltriert.

Die Umsetzung der so vorbehandelten Polymeren mit jeweils 100 g Maleinsäureanhydrid lieferte jeweils ein praktisch rückstandfreies Polyisobuten/Maleinsäureanhydrid-Additionsprodukt.

**Patentansprüche**

1. Verfahren zur Verbesserung der Weiterverarbeitungseigenschaften von Polymerisaten des Isobutens, dadurch gekennzeichnet, daß man sie

– bei 50–280 °C mit Aluminiumoxid und/oder einem vollständig oder partiell hydratisierten Aluminiumoxid und/oder

– bei 0–280 °C mit Boroxid und/oder vollständig oder partiell hydratisiertem Boroxid und/oder mit Titandioxid und/oder einem partiell hydratisierten Titandioxid und/oder mit einem vollständig oder partiell hydratisierten Siliciumdioxid

so lange in Kontakt bringt, bis das Polymerisat des Isobutens so weit gereinigt ist, daß es ein rückstandsfreies Umsetzungsprodukt mit Maleinsäureanhydrid liefert.

2. Verfahren nach Anspruch 1, dadurch gekennzeichnet, daß man bei 0–280 °C eine der definitionsgemäßen Aluminiumverbindungen verwendet, die mit einer der definitionsgemäßen Vorverbindungen dotiert ist.

3. Verfahren nach den Ansprüchen 1 und 2, dadurch gekennzeichnet, daß man es auf Polymere aus mindestens 80 mol% Isobuten anwendet, welche durch kationische Polymerisation bei (−50) bis (+30) °C mit Bortrifluorid als Katalysator und einer Polymerisationsdauer bis zu 10 min hergestellt worden sind.

**Claims**

1. A process for improving the processing properties of an isobutene polymer, wherein the latter is brought into contact

– with aluminium oxide and/or a completely or partially hydrated aluminium oxide at 50–280 °C, and/or

– with boron oxide and/or a completely or partially hydrated boron oxide and/or with titanium dioxide and/or a partially hydrated titanium dioxide and/or with a completely or partially hydrated silicon dioxide at 0–280 °C until the isobutene polymer is purified to such an extent that it gives a residue-free reaction product with maleic anhydride.

2. A process as claimed in claim 1, wherein one of the aluminium compounds of the type defined which has been doped with one of the boron compounds of the type defined is used at 0–280 °C.

3. A process as claimed in either of claims 1 and 2, wherein the polymer used is not less than 80 mol% of isobutene and has been prepared by cationic polymerization at from −50 to +30 °C using boron trifluoride as the catalyst, the polymerization time being not more than 10 minutes.

**Revendications**

1. Procédé d'amélioration des propriétés de mise en œuvre ultérieure de polymères d'isobutène, caractérisé en ce qu'on les met en contact

– à 50–280 °C, avec de l'oxide d'aluminium et/ou un oxyde d'aluminium complètement ou partiellement hydraté et/ou

– à 0–280 °C, avec de l'oxyde de bore et/ou de l'oxyde de bore complètement ou partiellement hydraté et/ou du bioxyde de titane et/ou un bioxyde de titane complètement ou partiellement hydraté et/ou avec un bioxyde de silicium complètement ou partiellement hydraté,

suffisamment longtemps pour que le polymère d'isobutène soit suffisamment purifié pour donner avec l'anhydride maléïque un produit de réaction exempt de résidu.

2. Procédé selon la revendication 1, caractérisé en ce qu'on utilise à 0–280 °C un des composés d'aluminium selon la définition donnée, qui a été dopé avec un des composés du bore selon la définition donnée.

3. Procédé selon la revendication 1 ou 2, caractérisé en ce qu'on l'applique à des polymères contenant au moins 80% en moles d'isobutène, lesquels ont été préparés par polymérisation cationique à une température de −50 à +30 °C avec du trifluorure de bore comme catalyseur et une durée de polymérisation allant jusqu'à 10 mn.